# EUROPEAN PATENT SPECIFICATION

(11) **EP 0 638 747 B1**
(45) Date of publication and mention of the grant of the patent: **26.11.1997**
(21) Application number: 94305942.8
(22) Date of filing: 11.08.1994
(51) Int. Cl.: F16L 1/20, G05G 7/10, G05G 13/00, E21B 41/04, E21B 41/00, F16C 1/06

(54) **Subsea pipeline support having an interface system for connecting a remote-operated vehicle**
Stütze für Unterwasserpipelines mit Verbindungsstelle zum Anschluss eines ferngesteuerten Fahrzeugs
Support de pipeline sous-marin avec système d'interface pour la connexion d'un véhicule télécommandé

(30) Priority: 12.08.1993 BR 9303365
(43) Date of publication of application: 15.02.1995
(60) Divisional application: 97105584.3
(73) Proprietor: PETROLEO BRASILEIRO S.A. - PETROBRAS, Rio de Janeiro (BR)
(72) Inventor: Dos Reis, Ney Robinson Salvi, Flamengo, Rio de Janeiro, RJ (BR); Da Cunha, Carlos Henrique Guimarâes, Piedade, Rio de Janeiro, RJ (BR)
(74) Representative: Barlow, Roy James

(56) References cited:
- WO-A-93/01438
- DE-A- 1 940 819
- US-A- 3 307 627
- US-A- 3 518 844

## Description

With gas and oil being searched for in ever deeper waters, and since known techniques cannot cope at such depths, new ones had to be developed in lieu of the use of divers.

An example involves span-supporting systems for rigid subsea pipelines carrying the oil and gas produced. Such subsea pipelines have to be supported whenever any free span of pipe, arising out of the unevenness of the sea bed, is longer than that allowed for under the design.

The kind of conventional supporting used until recently has had limited use because divers have had to be employed to do the work, as for example when torque had to be applied at predetermined points to raise the sliding supporting devices for rigid pipelines. In order to be able to support rigid pipelines at depths beyond those at which divers can work, new techniques are being developed that do not require the work of divers.

One of the solutions currently employed is to let down to the sea bed hydraulic units together with the mechanical rigid pipeline supports. Such hydraulic units provide the hydraulic power for the hydraulic motors installed close to the points where torque is to be applied, such motors producing the torque required at each such point and thereby enabling the whole arrangement to be put into action.

This solution is fraught with several disadvantages, such as the high cost of the hydraulic units, of the hydraulic motors, of the connections, and of the umbilicals that have to feed the hydraulic unit down at the sea bottom with power from the support vessel at the surface, plus the problems brought about by a subsea system operating at high ambient (water) pressures.

Another solution also currently employed is to use remote-controlled vehicles. Upon development of technology for the use of such remote-controlled vehicles for jobs which until then had been done by divers, it became feasible and relatively cheaper to make greater use of the various kinds of equipment needed to produce oil and gas at depths quite a lot greater than before.

However, because of the complex geometry usually encountered in the equipment of the various sorts of subsea systems employed in the search for, and production of, oil and gas, there is always the risk of a remote-controlled vehicle becoming trapped in the course of its subsea work, as for instance when torque has to be applied at points difficult to access. Another drawback to consider is the delay incurred by the remote-controlled vehicle when torque has to be applied at such points of difficult access, which may even render a job impracticable because of the high cost involved.

The invention aims to provide a span supporting system for pipeline support in subsea oil or gas exploration including an interface system for use at high static water pressures and operated by remote-controlled vehicles. All the usual points for the application of torque in subsea equipment are transferred to a panel at which terminals for the connection of torque-applying tools for remote-operated vehicles are standardized.

US-A-3518844 discloses a system of controlling several valves from a single location by means of a flexible drive comprising a tensionally rigid but flexible inner shaft and an outer sheath.

The present invention is characterised by the features of claim 1.

Torque-applying points are so placed as to enable jobs to be done with greater speed and safety, thereby reducing the length of time in use of a remote-controlled vehicle and the risk of it becoming trapped and being damaged. In addition, use can be made of various other means, as for instances divers' hand-operated tools.

The purposes, features and advantages of this invention will be better perceived with the aid of the following detailed description given, merely by way of example, with reference to the attached drawings, in which:-
FIGURE 1 is a front view of a mechanical support for a subsea pipeline showing sliding legs in both retracted and extended positions;
FIGURE 2 is a front view of a mechanical support for a subsea pipeline with an interface panel for using a remote-operated vehicle;
FIGURE 3 is a cross-sectional view of a terminal assembled on the panel of Figure 2; and
FIGURE 4 is a sketch showing connections between the panel and the points where torque is to be applied.

In order better to understand the invention the supporting system for rigid subsea pipelines previously referred to will be further described, thereby clearly showing advantages to be derived from the present invention.

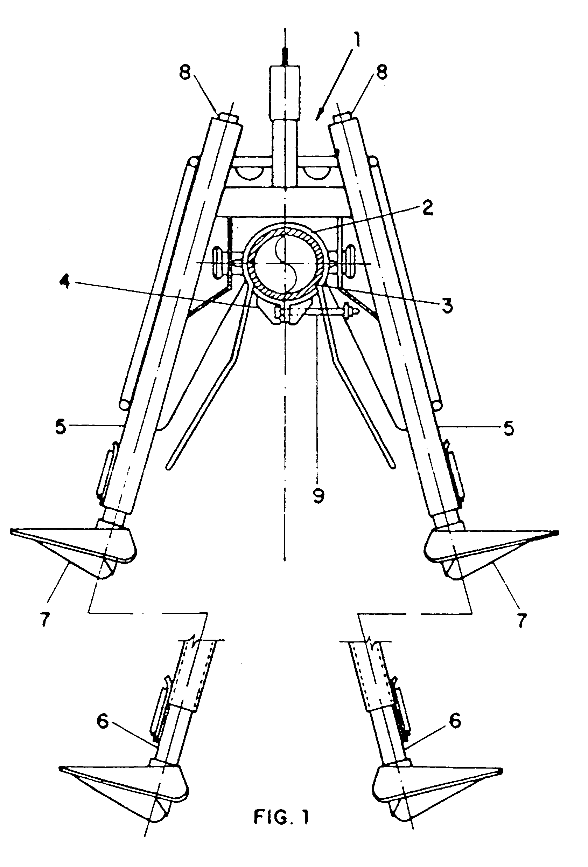

As can be seen from Figure 1, the usual kind of mechanical support for a subsea pipeline consists basically of a structure 1, and a pipeline fixing system 2 to which a pipeline 3 can be fixed by means of clamps 4. The assembly is also made up of fixed outer legs 5, sliding lower legs 6, and shoes 7, the sliding lower legs 6 being operated by screws 8, and the clamps 4 being operated by screws 9. Rotation of the screws 8 and 9 is effected in the usual way by a remote-operated vehicle.

In order to make it easier for the remote-operated vehicle to obtain access to the torque-applying screws 8 and 9 to which, as can be seen from Figure 1, access is difficult, the invention allows for the transfer of the torque-applying points to a panel 10 on which are standard connecting terminals 11 provided with releasable connectors 12, in this case a hexagon or octagon nut. The terminals 11 lie spaced apart from one another and are clearly marked according to the torque-applying points in order to facilitate access by the remote-operated vehicle.

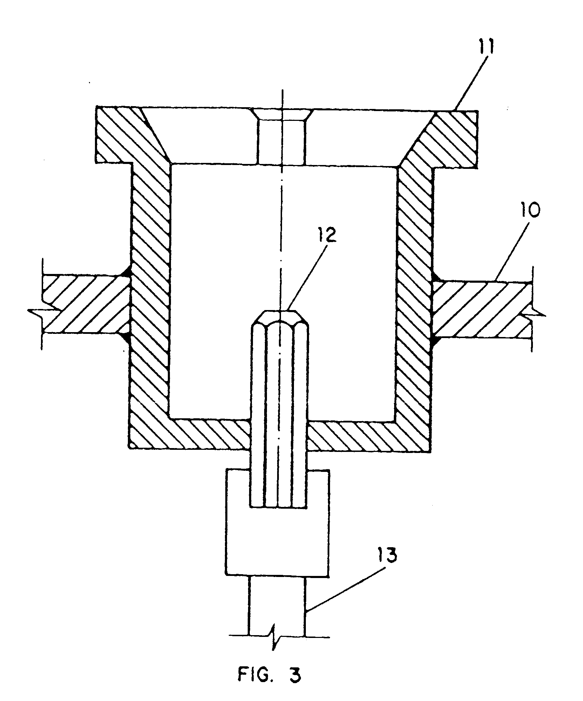

As can be seen from Figure 3, the sockets 12 are anchored, by their ends facing the rear side of the panel, to flexible torque-conveying drives which extend towards torque-applying points at screws 8 and 9 so as to link individually the terminal 11 to the torque-applying points 8 and 9. In this embodiment the flexible drives shown to convey the torque are non-twisting steel cables 13. Whenever possible such steel cables 13 should run inside conduits 14 so as to prevent them from becoming twisted.

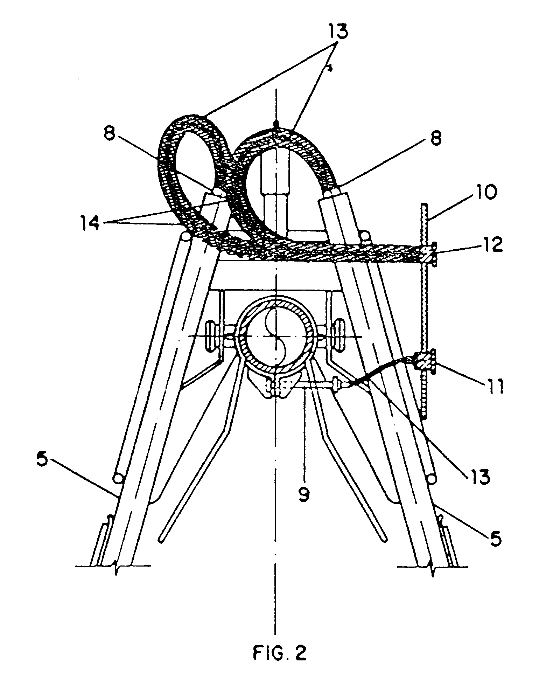

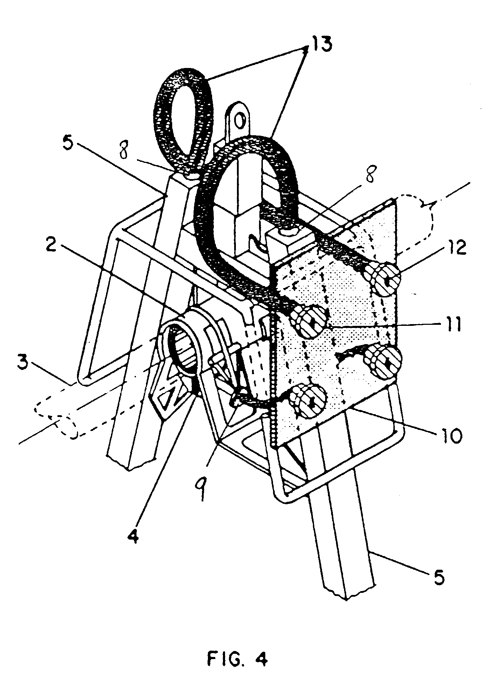

Figure 4 is a sketch of the apparatus of the invention showing transfer from torque-applying points (screws 8 and 9 of Figure 2) to the panel 10, thereby enabling a remote-operated vehicle to work without any repositioning, and avoiding the risk of the vehicle becoming trapped. In order to make the sketch easier to understand, only the main parts of the system have been shown.

Another advantage is that the working of the sockets need not be effected only by the special tool belonging to the remote-operated vehicle for such purpose, but can also be worked by various other kinds of device, such as by a hydraulically-operated wet Xmas tree tool, or by the jaw of most handling claws of remote-operated vehicles, or by divers, thereby enhancing the operational flexibility of such equipment.

It will be understood by those engaged in this type of work that use of an interface system for remote-operated vehicles is not confined to the rigid pipeline supports referred to above but the invention can also be employed for any other type of equipment, whether subsea or not, whenever torque has to be applied at predetermined points, or whenever it is desired to centralize the torque-applying points in order to optimize use of a remote-operated vehicle or of any other kind of operating system.

## Claims

1. A span supporting system for pipeline support in subsea oil or gas exploration or producing equipment, including an interface system for the operation of a torquing tool, and apparatus operated thereby, including at least one panel (10) having terminals (11) of a standard type comprising a socket fitted with a connector (12) for releasable. torque-transmitting engagement by a torque-applying tool, wherein said connectors (12) are individually connected by means of a flexible torque-transmitting drive (13) to the various points of the apparatus where torque is to be applied, thereby enabling the various torque-operating points to be centralized within said at least one panel (10); wherein the flexible torque-transmitting drive (13) is a non-twisting kind of steel cable.

2. A system according to claim 1, wherein said torquing tool is a remote-operated vehicle.

3. A system according to either of claims 1 and 2, wherein said releasable connector is a nut, preferably a hexagon nut.

## Patentansprüche

1. Ein Stützsystem für freitragende Abschnitte zum Stützen von Pipelines einer Anordnung oder Einrichtung für die Unterwasser-Öl- oder -Gasexploration oder -gewinnung, einschliessend ein Koppelsystem zum Bedienen eines Drehmomentwerkzeugs und eine dadurch bediente Vorrichtung, einschließend mindestens ein Bedienpult (10) mit Anschlüssen (11) eines Standard-Typs, aufweisend einen Sockel, welcher mit einem Verbindungsstück (12) ausgestattet ist für einen lösbaren drehmomentübertragenden Eingriff durch ein ein Drehmoment ausübendes Werkzeug, wobei die Verbindungsstücke (12) einzeln mittels eines flexiblen drehmomentübertragenden Antriebs (13) mit den verschiedenen Punkten der Vorrichtung verbunden sind, an denen das Drehmoment ausgeübt werden soll, wodurch ermöglicht wird, daß die verschiedenen durch Drehung betriebenen Punkte innerhalb des wenigstens einen Bedienpults (10) zentralisiert werden; wobei der flexible drehmomentübertragende Antrieb (13) eine nicht verdrehbare Art von Stahlkabel ist.

2. System nach Anspruch 1, wobei das Drehmomentwerkzeug ein ferngesteuertes Fahrzeug ist.

3. System nach einem der Ansprüche 1 und 2, wobei das lösbare Verbindungsstück eine Mutter, vorzugsweise eine sechseckige Mutter, ist.

## Revendications

1. Système de support à pontage pour pipeline sous-marin dans un équipement d'exploration ou de production de gaz ou de pétrole, comprenant un système d'interface pour le fonctionnement d'un outil de torsion, et un appareil mis en oeuvre par ce système, comprenant au moins un panneau (10) muni de terminaux (11) d'un type standard comportant une douille munie d'un collecteur (12) destiné à transmettre un couple de manière libérable au moyen d'un outil d'application d'un couple, caractérisé en ce que lesdits connecteurs (12) sont individuellement connectés au moyen d'un entraînement flexible (13) transmetteur de couple aux différents points de l'appareil où le couple doit être appliqué, permettant ainsi aux différents points de mise en oeuvre du couple d'être centralisés dans ledit au moins un panneau (10), et en ce que l'entraînement flexible (13) de transmission du couple est un câble en acier du type à non torsion.

2. Système selon la revendication 1, caractérisé en ce que ledit outil d'application d'un couple est un véhicule télécommandé.

3. Système selon l'une des revendications 1 et 2, caractérisé en ce que ledit connecteur libérable est un écrou, de préférence un écrou hexagonal.
